# EUROPEAN PATENT APPLICATION

(11) **EP 1 715 448 A2**
(43) Date of publication of application: **25.10.2006**
(21) Application number: 06300257.0
(22) Date of filing: 21.03.2006
(51) Int. Cl.: G06K 19/077

(54) **Identification badges with RFID tags and methods thereof**

(30) Priority: 22.03.2005 US 663989
(71) Applicant: LASER REGISTRATION - LRI - INC, Montréal QC H2W 2R2 (CA)
(72) Inventor: HARRIS, Simon, MONTREAL Québec H1M 3B1 (CA); MELIS, Tony, CANDIAC Québec J5R 3M8 (CA); VANDAMME, Patrick, PIERREFONDS Québec H9J 3C4 (CA)
(74) Representative: Vuillermoz, Bruno

(57) **Abstract**

An identification badge includes a badge holder (100) having at least one surface, means to receive a name tag, an RFID tag (20) affixed to the badge holder or the name tag, and a spacer (70) adapted to extend away from the at least one surface. The spacer creates a first distance between the RFID tag and a body of a person wearing (10) the identification badge.

## Description

### CROSS-REFERENCE TO RELATED APPLICATIONS

This present application is based on commonly assigned US patent provisional application Ser. No. 60/663,989, filed on March 22, 2005 and entitled "Identification Badges with RFID Tags and Methods Thereof'.

### FIELD OF THE INVENTION

The present invention generally relates radio frequency identification devices ("RFID") devices and, more particularly, to identification badges with RFID tags and methods thereof.

### BACKGROUND OF THE INVENTION

The purpose of an RFID system is to enable data to be transmitted between a tag (a chip embedded in a very small portable device) and an RFID reader via an antenna. Tags are most often passive, which means they are powered by the magnetic field emitted from the antenna. Therefore when a tag is put in proximity to an antenna, it is powered and the reader can read or write data on the tag. All readers have a range that depends on the surrounding conditions: respective positions and orientations of the tag and the antenna(s), walls, presence of metal, water, and other materials, power of the antennas, and size of the tags. When the conditions are satisfactory, the tag can be successfully read or written, otherwise communication is not possible. Some RFID readers operate in the UHF band, with practical ranges going up to fifteen feet.

Unfortunately, one of the problems with RFID is that water absorbs UHF signals and can therefore compromise the reliability of the reading of RFID tags. Since human beings are composed mostly of water (about 60%), RFID readers will not be able to communicate with a tag located very close to the body of a human.

In many settings, people carry visible identification cards. For example, in most conferences and many trade shows, attendees are given a paper badge or a magnetic stripe card which they carry using a standard badge holder. In such a setting, it may be desirable to have attendees carry an RFID tag that can be read from a practical distance, by way of example six feet. For the reasons given above, simply affixing an RFID tag to the paper badge or badge holder will not yield acceptable results, much less than 90% accuracy.

Indeed, numerous badge holder designs have been proposed throughout the years. For example, US patent nos. 4,869,004; 6,035,564; 6,681,972 and 6,752,305 all propose different versions of badge holders. Badge holders are generally affixed to the wearer using a pin or a lanyard assembly. The first problem with these badge holders is that they were not designed to incorporate RFID capabilities. The second problem with these holders is that they are installed very close to the body of the wearer. Therefore, should a RFID tag be attached to these holders, it would be difficult to obtain efficient reading of the tags for the reasons mentioned above.

In US patent no. 5,986,562, Nikolich proposed a RFID tag holder for non-RFID tag. In the invention of Nikolich, the RFID tag is embedded into the holder and the badge, card, ID or the like is inserted into the holder. The problem with this particular holder is that when worn in a normal fashion, the holder will generally be close to the body of the wearer, resulting in the same RFID tag reading problem discussed above.

There is thus a need for an improved RFID badge holder which can easily be read when worn normally.

### SUMMARY OF THE INVENTION

An identification badge in accordance with embodiments of the present invention includes a badge holder having at least one surface, an RFID tag affixed to the badge holder or the badge itself, and a spacer adapted to extend away from the at least one surface. The spacer creates a first distance between the RFID tag and a body of a person wearing the identification badge.

A method of making an identification badge in accordance with embodiments of the present invention includes providing a badge holder having at least one surface, affixing an RFID tag connected to the badge holder or the badge itself, and providing a spacer which is adapted to extend away from the at least one surface. The spacer creates a first distance between the RFID tag and a body of a person wearing the identification badge.

### BRIEF DESCRIPTION OF THE DRAWINGS

FIG. 1 is an isometric view of a RFID badge holder in accordance with embodiments of the present invention.

FIG. 2 is a side view of another embodiment of a badge holder in accordance with other embodiments of the present invention.

FIG. 3 is a side view of yet another embodiment of a badge holder in accordance with other embodiments of the present invention.

FIG. 4 is a rear view of another embodiment of a badge holder.

FIG. 5 is a rear isometric view of the embodiment of FIG. 4.

FIG. 6 is a side view of the embodiment of FIG. 4.

### DETAILED DESCRIPTION

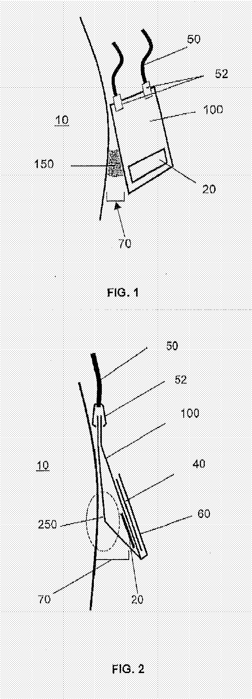

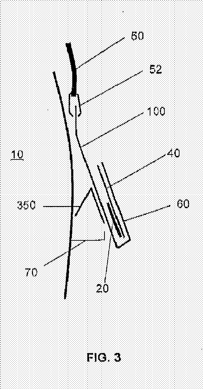

The present invention can be embodied in a plurality of embodiments. Different embodiments of the RFID badge holder in accordance with the present invention are illustrated in FIGS. 1-6 respectively. The RFID badge holder 100 generally comprise a badge 40, an RFID tag 20, and a spacer 150, 250, 350 or 450, although the RFID badge holder 100 can comprise other numbers and types of components in other configurations. For example, in FIGS. 2 and 3, the badge holder 100 comprises a badge holder pocket 60 to hold the badge 40 and possibly the RFID tag 20.

In order to improve the reading the RFID tag 40 and to resolve the problem of the absorption of UHF signals by the human body 10 while still keeping the basic concept of the badge holder 100 and keeping the printed identification 40 visible to others, we designed an economical "filling" or "spacer" which will insure that a small distance 70 is created and maintained between the badge holder 100 and the human body 10. The distance 70 is preferably in the order of one inch (2.5 cm). However, different distances could be used according to the frequencies used to read to RFID tag 40. The badge holder 100 design also includes a lanyard 50 that prohibits the rotation of the badge holder 100. Should the badge holder 100 flips, the spacer 150, 250, 350 or 450 would face the exterior and thus, would be rendered useless.

Referring to FIGS. 1-6, the spacers 150, 250, 350 or 450 at the back of the badge holder 100 imposes a distance 70 between the RFID tag 20 and the body 10 of the person wearing the identification badge 100. In these particular embodiments, the distance 70 provided by the spacers 150, 250, 350 or 450, who will allow for effective reading of the RFID tag 20, is at least one inch (2.5 cm) from the body 10 of a person, although other distances could be used as mentioned above.

Referring to the embodiment of FIG. 1, the spacer 150 is directly connected to the surface of the badge holder 100 which will face the human body 10, although other types of spacers can be used, such as those shown in FIGS. 2 and 3 by way of example. Still referring to FIG. 1, the spacer 150 is a piece of foam, although other types of materials in other shapes can be used.

Referring to FIG. 2, the badge holder 100 comprises at least first and second layers. The first layer generally defines the main body of the badge holder 100. In this second embodiment, the second layer defines the spacer 250 by having a shape which extends out in a generally triangular shape from the first layer. The extended portion 250 of the second layer provides the necessary distance 70 between the RFID tag 20 and the human body 10. It is to be understood that badge holder 100 of this second embodiment could comprise several other layers and elements which would provide the desired spacing.

Referring to FIG. 3, there is shown another embodiment of the badge holder 100 of the present invention. In this third embodiment, the spacer 350 is a bent layer of material connected to and which extends out from the badge holder 100 to provide the desired distance 70. The material which composes the spacer 350 should preferably be resilient in order for the bent layer 350 to keep its shape and thus, the desired distance 70 between the RFID tag 20 and the body 10. It is understood that other types of shapes and configurations and numbers of layers and elements can be used for the spacer 350.

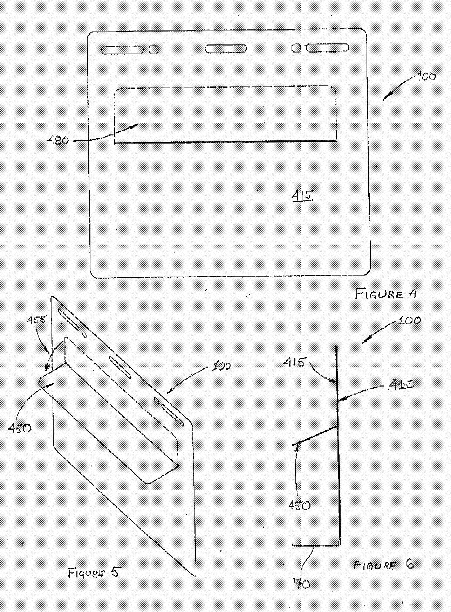

Referring to FIGS. 4 to 6, there is shown yet another embodiment of the badge holder 100 of the present invention. In this fourth embodiment, the badge holder 100 generally comprises at least two layers 410 and 415 of material. The front layer 410, partially shown in FIG. 6, is adapted to receive a badge 40, generally but not exclusively by means of a pocket (similar to pocket 60). The back layer 415, which is generally fixedly mounted to the front layer 410, further comprises a cut-out portion 480 which is adapted to be outwardly bent (see arrow 455) to define a spacer 450 as best shown in FIGS. 5 and 6. Once deployed, the spacer 450 similarly creates a space 70 between the body of the wearer (not shown) and the RFID tag (not shown). This fourth embodiment has the definite advantage in that it can be packaged and shipped in a flat form. In other words, this fourth embodiment can be packaged and shipped with its spacer 450 undeployed, thus a large number of badge holders 100 can be packed in a relatively compact package. The spacer 450 can than be deployed later.

The skilled addressee will understand that the fourth embodiment shall also generally be equipped with a lanyard 50 and clips 52 or other similar securing device.

In all these embodiments, the RFID tag 20 can be either directly connected to the badge holder 100, or connected to the badge 40. In FIG. 2, the tag 20 is directly connected to the badge holder 100. Alternatively, in FIG. 3, the tag 20 is connected directly on the badge 40 which is located in the badge holder pocket 60. Whether it is attached to the badge holder 100 or the badge 40, the RFID tag 20 can be affixed in a variety of manners, such as with glue.

Additionally, the badge holders 100 can be produced in large quantities with the RFID tag 20 included, such as in FIG. 2. If the RFID tag 20 is attached to the name badge 40, the name badge 40 with the RFID tag 20 can be sent to the user by mail in a regular envelope or can be delivered in other manners.

The badge holder is secured around the neck of a person with a lanyard 50, although other types of securing devices can be used. The lanyard 50 is connected to the badge holder 100 with two clips 52 which have a double function: keep the shape of the badge holder 100 and attach the lanyard 50. This connection of the lanyard 50 to the badge holder 100 also helps to keep the badge holder 100 in the correct orientation to keep the spacing 70 of the RFID tag 20 from the human body 10 by at least the desired distance 70.

The name badge 40 can be a paper or a plastic badge that contains the necessary identification information about the person. This information can be printed as characters, bar code or stored on a magnetic stripe which is attached to the name badge 40. The name badge 40 is inserted in a transparent pocket or slot 60 of the badge holder 100.

Having thus described the basic concept of the invention, it will be rather apparent to those skilled in the art that the foregoing detailed disclosure is intended to be presented by way of example only, and is not limiting. Various alterations, improvements, and modifications will occur and are intended to those skilled in the art, though not expressly stated herein. These alterations, improvements, and modifications are intended to be suggested hereby, and are within the spirit and scope of the invention. Additionally, the recited order of processing elements or sequences, or the use of numbers, letters, or other designations therefore, is not intended to limit the claimed processes to any order except as may be specified in the claims. Accordingly, the invention is limited only by the following claims and equivalents thereto.

## Claims

1. An identification badge comprising:
a badge holder having at least one surface;
an RFID tag; and
a spacer adapted to extend away from the at least one surface;
wherein the spacer creates a first distance between the RFID tag and a body of a person wearing the identification badge.

2. The badge as set forth in claim 1 wherein the badge holder further comprises means for receiving a name tag.

3. The badge as set forth in claim 2 wherein the RFID tag is connected to the name tag.

4. The badge as set forth in claim 1 wherein the RFID tag is directly connected to the badge holder.

5. The badge as set forth in claim 1 wherein the first distance is at least one inch.

6. The badge as set forth in claim 1 wherein the spacer comprise a filler which is secured to and extends out from the at least one surface to provide the first distance.

7. The badge as set forth in claim 1 wherein the badge holder comprises at least first and second layers, the first layer has the at least one surface and said spacer comprises the second layer which has a shape which extends out from the at least one surface to provide the first distance.

8. The badge as set forth in claim 1 wherein the spacer comprises a bent layer of material connected to and which extends out from the at least one surface of the badge holder to provide the first distance.

9. The badge as set forth in claim 1 further comprising a securing device connected to the badge holder, the securing device is used to secure the badge holder to the body of the person.

10. The badge as set forth in claim 9 wherein the securing device is a lanyard which is connected to the badge holder to keep the at least one surface of the badge holder facing the body of the person.

11. An identification badge comprising:
a badge holder having at least one surface which comprises a cut-out portion having a plurality of sides;
a RFID tag;
wherein said cut-out portion is adapted to form a spacer creating a first distance between the RFID tag and a body of a person wearing said identification badge.

12. The badge as set forth in claim 11, wherein one of said plurality of sides is permanently attached to said at least one surface.

13. A method of making an identification badge, the method comprising:
providing a badge holder having at least one surface;
providing an RFID tag; and
providing a spacer which is adapted to extend away from the at least one surface;
affixing said spacer and said RFID tag to said badge holder;
wherein the spacer creates a first distance between the RFID tag and a body of a person wearing the identification badge.

14. The method as set forth in claim 13 further comprises placing a name tag on the badge holder.

15. The method as set forth in claim 14 further comprising connecting the RFID tag to the name tag.

16. The method as set forth in claim 13 further comprising directly connecting the RFID tag to the badge holder.

17. The method as set forth in claim 13 wherein the first distance is at least one inch.

18. The method as set forth in claim 13 wherein the spacer comprise a filler which is secured to and extends out from the at least one surface to provide the first distance.

19. The method as set forth in claim 13 wherein the badge holder comprises at least first and second layers, the first layer has the at least one surface and spacer comprises the second layer which has a shape which extends out from the at least one surface to provide the first distance.

20. The method as set forth in claim 13 wherein the spacer comprises a bent layer of material connected to and which extends out from the at least one surface of the badge holder to provide the first distance.

21. The method as set forth in claim 13 further comprising a securing the badge holder to the body of a person with a securing device that is connected to the badge holder.

22. The method as set forth in claim 21 wherein the securing device is a lanyard which is connected to the badge holder to keep the at least one surface of the badge holder facing the body of the person.

23. A method of making an identification badge, the method comprising:
providing a badge holder having at least one surface;
providing an RFID tag ; and
providing a spacer which is adapted to extend away from the at least one surface;
affixing said spacer to said badge holder;
wherein the spacer creates a first distance between the RFID tag and a body of a person wearing the identification badge.

24. The method as set forth in claim 23 further comprising placing a name tag on the badge holder.

25. The method as set forth in claim 24 further comprising connecting the RFID tag to the name tag.

26. The method as set forth in claim 23 wherein the first distance is at least one inch.
